# EUROPÄISCHE PATENTSCHRIFT

(11) **EP 0 468 346 B1**
(45) Veröffentlichungstag und Bekanntmachung des Hinweises auf die Patenterteilung: **18.09.1996**
(21) Anmeldenummer: 91111902.2
(22) Anmeldetag: 17.07.1991
(51) Int. Cl.: G11B 20/10, G11B 20/24, G11B 5/09

(54) **Schaltung zur Wiedergabe digitaler Daten**
Circuit for reproducing digital data
Circuit de reproduction de données numériques

(30) Priorität: 26.07.1990 DE 4023678
(43) Veröffentlichungstag der Anmeldung: 29.01.1992
(73) Patentinhaber: DEUTSCHE THOMSON-BRANDT GMBH, 78048 Villingen-Schwenningen (DE)
(72) Erfinder: Ishibashi, Hiroati, Chib, Chiba-City (JP); Nozaki, Masato, Midori-Ku, Yokohama City (JP)

(56) Entgegenhaltungen:
- DE-A- 3 528 973
- GB-A- 2 222 331

## Beschreibung

Die Erfindung betrifft eine Schaltung zur Wiedergabe digitaler Daten, wobei die Daten bei der Wiedergabe einem Signal prozessor Zugeführt werden und Stumm-Schaltungen vorgesehen sind.

Solche Schaltungen sind aus Wiedergabe- und/oder Aufzeichnungsvorrichtung und -geräten, wie z.B. DAT- (Digital Audio Tape) Recorder/Player und CD- (Compact Disc) Recorder/Player bekannt, vgl. z.B. GB-A-2 222 331.

Für alle diese Geräte sind verschiedene Datenraten und damit unterschiedliche Abtastfrequenzen festgelegt (z.B. CD-Standard-Format 44,1 kHz). Für DAT-Player/Recorder sind vier verschiedene Aufzeichnungs- und/oder Wiedergabemodi vorgesehen, nämlich 48 kHz (Abtastfrequenz), normale Aufnahme/Wiedergabe (rec./PB (Record/Play-Back)) (A), 44,1 kHz nur PB (B), 32 kHz normal rec./PB (C) und 32 kHz Long Play (LP) rec./PB (D). In der Regel verfügen DAT-Recorder/Player aber nicht über alle Betriebsmodi A, B, C und D. Nur ganz wenige Modelle weisen z.B. den Betriebsmodus D auf, d.h. können Aufzeichnungen in diesem Betriebsmodus aufnehmen bzw. Aufzeichnungen, die in diesem Betriebsmodus aufgenommen sind, verarbeiten.

Mit DAT-Recordern, die beispielsweise über die Betriebsmodi A und D verfügen, ist es möglich, auf einem Magnetband Aufnehmen mit unterschiedlichen Betriebsmodi aufzuzeichnen, so daß ein Band z.B. Aufzeichnungen mit 48 kHz normal rec./PB (A) und 32 kHz Long Play (D) enthält.

Bei der Wiedergabe solcher Aufnahmen von einem DAT-Recorder, der z.B. nur über die drei Betriebsmodi A - C verfügt, ist es zum einen nötig, daß beim Abtasten der Aufzeichnungen mit dem Betriebsmodus D eine Stumm-Schaltung (muting circuit) aktiviert wird, die den digitalen und/oder analogen Ausgang (Audioausgang) genau dann abschaltet, wenn das Aufzeichnungsstück mit 48 kHz Abtastrate beendet ist und noch keine Information mit 32 kHz (Long Play) Abtastrate den Ausgängen zugeführt sind. Anderenfalls ist es aber auch möglich, daß im Bereich des Übergangs auf dem Band vom Betriebsmodus A nach D oder umgekehrt unerwünschte Daten oder Signale, wie z.B. Geräusche oder Rauschen auf den analogen Ausgang gegeben werden, weil die Aktivierung oder Deaktivierung der Stumm-Schaltung etwa zu spät erfolgt.

Zwar ist die unerwünschte Wiedergabe von digitalen und/oder analogen Daten im 32 kHz LP Mode bei einem oben genannten DAT-Recorder ohne 32 kHz LP Mode für den DAT-Recorder selbst nicht schädlich, es ist aber unter Umständen möglich, daß dadurch ein angeschlossenes Lautsprechersystem beschädigt oder zerstört wird, weil sich z.B. die Informationen im 32 kHz LP Mode als Knacken oder Spikes äußern.

Der Grund für eine solche und unter Umständen auch für das Lautsprechersystem beschädigende Wiedergabe liegt darin, daß, wenn der DAT-Recorder im 48 kHz Mode abgetastete Signale vom Abtastkopf empfängt und der Betriebsmodus (hier von A nach D) plötzlich umspringt, es einige Zeit braucht, bis im Signalprozessor und Mikrocontroller des DAT-Recorders der neue Betriebsmodus registriert ist. Wenn der Signalprozessor den neuen (in diesem Fall den unzulässigen) Betriebsmodus erkannt hat, sind aber schon einige Daten vom Signalprozessor verarbeitet worden und z.B. den analogen Ausgang zugeführt, so daß diese Daten an einem am analogen Ausgang angeschalteten Lautsprechersystem reproduziert werden, bevor die Stumm-Schaltung aktiviert wird, die die Wiedergabe unerwünschter Informationen unterbinden soll.

Es ist bekannterweise in DAT-Recordern vorgesehen, daß die Daten eines Aufzeichnungsstückes erst dann auf die Ausgänge gegeben werden, wenn ein sogenannter S-ID- (Start IDentification) Puls detektiert wird, wobei der S-ID-Puls den Beginn eines Aufzeichnungsstückes oder Programms anzeigt. Bei den bisherigen DAT-Recordern besteht jedoch das Problem, daß die Zeitabstimmung (timing) zwischen den Ausgängen, Verarbeitung des S-ID-Pulses im Signalprozessor und Mikrocontroller, und die Aktivierung der Stumm-Schaltungen nicht immer exakt koinzident ist, so daß es in Konsequenz daraus neben den voraus beschriebenen Auswirkungen unter anderem auch zu dem Fall (Umschaltung von D nach A) kommen kann, daß der Beginn eines Aufzeichnungsstückes (48 kHz normal PB) verpaßt wird aufgrund der verzögerten Freigabe der Stumm-Schaltung (en).

Der Erfindung liegt die Aufgabe zugrunde, unerwünschte Geräusche beim Wechsel von Betriebsmodi zu unterbinden und die Aktivierung oder Deaktivierung der Stumm-Schaltung (en) der Ausgänge, und die Wiedergabe von Daten, die in unterschiedlichen Betriebsmodi auf dem Aufzeichnungsträger gespeichert sind, aufeinander abzustimmen.

Die Aufgabe wird erfindungsgemäß durch die Merkmale des Anspruchs 1 gelöst.

Es ist an sich hinreichend bekannt vor Stummschaltungen oder Dämpfungs glieder im Signalweg Verzögerungsglieder vorzusehen, damit eine Zeitgerechte Steuerung der Stumm-Schaltungen bzw. Dämpfungsglieder von einem Steuersignal möglich ist, vgl. z.B. DE-A-3 528 973.

Vorteilhafte Weiterbildungen und Ausführungen ergeben sich aus den Unteransprüchen.

Durch eine solche Verzögerungsstufe im Signalweg vom Signalprozessor zum digitalen und/oder analogen Ausgang vor der gemeinsamen Stumm-Schaltung oder den separaten Stumm-Schaltungen der jeweiligen Signalwege werden z.B. die Daten im Signalweg des analogen Ausgangs solange verzögert, daß die Stumm-Schaltung in jedem Falle entweder rechtzeitig exakt eingeschaltet oder abgeschaltet werden kann. Dadurch erfolgt eine rechtzeitige und exakte Stumm-Schaltung beim Übergang von Gebieten von zwei verschiedenen Betriebsmodi auf dem Band, von denen ein Betriebsmodus von dem DAT-Recorder nicht verarbeitet werden kann. Die Verzögerungsstufe hat auch den Vorteil, der einfachen und zuverlässigen Ausführungsweise, so daß auf aufwendige Abstimmungsvorrichtungen und Verfahren zum Abstimmen der Laufzeiten und zur exakten Stumm-Schaltung verzichtet werden kann.

Die Erfindung wird im folgenden an Hand von in Zeichnungen dargestellten, beispielhaften Ausführungen näher erläutert. In der Zeichnung stellen dar:
- Fig. 1: Blockschaltbild der Schaltung zur Wiedergabe von Daten in einem DAT-Recorder,
- Fig. 2: ein erstes Beispiel einer Verzögerungs-Stufe, im wesentlichen bestehend aus einer Reihenschaltung von Schieberegistern,
- Fig. 3: ein weiteres Beispiel einer Verzögerungs-Schaltung.

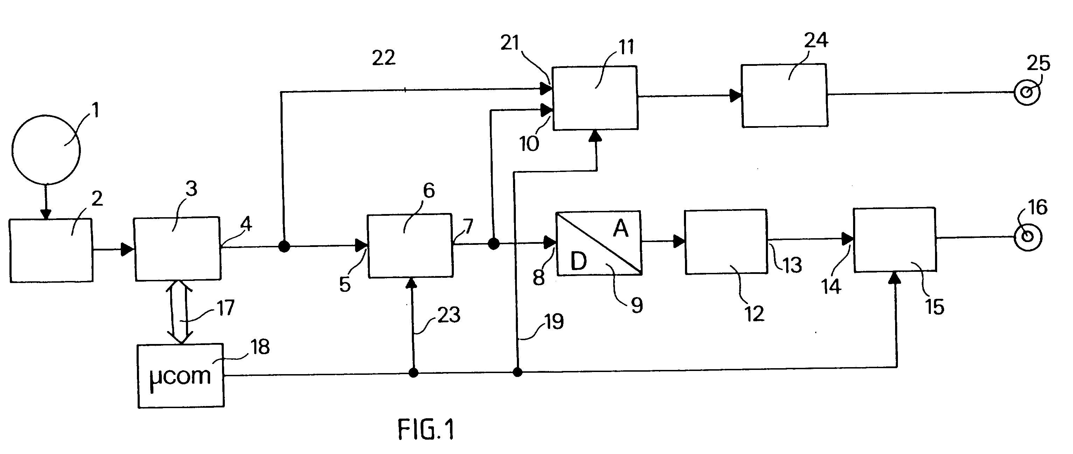

Fig. 1 zeigt ein Blockschaltbild der Schaltung zur Wiedergabe von Daten in einem DAT-Recorder. Es ist der Signalweg der Nutzdaten vom Speichermedium zum digitalen und analogen Ausgang des Aufzeichnungs- und/oder Wiedergabegerätes gezeigt. Die Verbindungen der einzelnen Schaltelemente erfolgt mittels elektrischer Leitungen. Nach Abtastung der Daten mittels Abtasteinheit 2 vom Speichermedium 1 wird der gesamte Datenstrom einem Signalprozessor 3 zugeführt. Ein ersten Ausgang 4 des Signalprozessors, über den die eigentlichen Nutzdaten ausgegeben werden, ist mit dem Eingang 5 einer gemeinsamen Verzögerungsstufe 6 für beide Ausgänge verbunden. In der Verzögerungsstufe 6 werden die digitalen Daten nach einer gewünschten Verzögerungszeit weitergegeben. Der Ausgang 7 der Verzögerungsstufe 6 ist mit dem Eingang 8 eines D/A-Wandler 9 und mit dem Eingang 10 einer Stummschaltung 11 für den digitalen Ausgang (digital muting) verbunden. Dem D/A-Wandler 9 ist ein Tiefpaßfilter 12 nachgeschaltet. Der Ausgang 13 des Tiefpaßfilters 12 ist mit dem Eingang 14 einer Stumm-Schaltung 15 (analog muting) verbunden, und der Ausgang 16 der Stumm-Schaltung 15 stellt den analogen oder Audio-Ausgang der Schaltung im Aufzeichnungs- und/oder Wiedergabegeräte dar. Der Signalprozessor 3 ist über einen Bus 17 mit einem Mikrocontroller 18 verbunden, der seinerseits wiederum mit den beiden Stumm-Schaltungen über die elektrischen Leitungen 19 und 20 und über die Leitung 23 mit der Verzögerungsstufe 6 verbunden ist und die Ab- und Anschaltung der Verzögerungsstufe steuert. Der Mikrocontroller 18 erzeugt außerdem ein mute- (on/off) Puls erzeugt, mittels dem die Aktivierung oder Deaktivierung der Stumm-Schaltungen gesteuert wird. Des weiteren ist der erste Ausgang 4 des Signalprozessors 3 ebenfalls mit einem zweiten Eingang 21 der Stumm-Schaltung 11 für den digitalen Ausgang verbunden. Die Daten vom Signalprozessor werden über die Verbindungsleitung 22 und dem Eingang 21 erst dann dem digitalen Ausgang zugeführt, wenn die Verzögerungsstufe 6 abgeschaltet ist und die Stumm-Schaltung über den Eingang 10 keine Daten empfängt. Der Stumm-Schaltung 11 für den digitalen Ausgang ist eine Ausgangsstufe 24 (digitaler Transmitter) nachgeschaltet, dessen Ausgang den digitalen Ausgang 25 der Schaltung bildet.

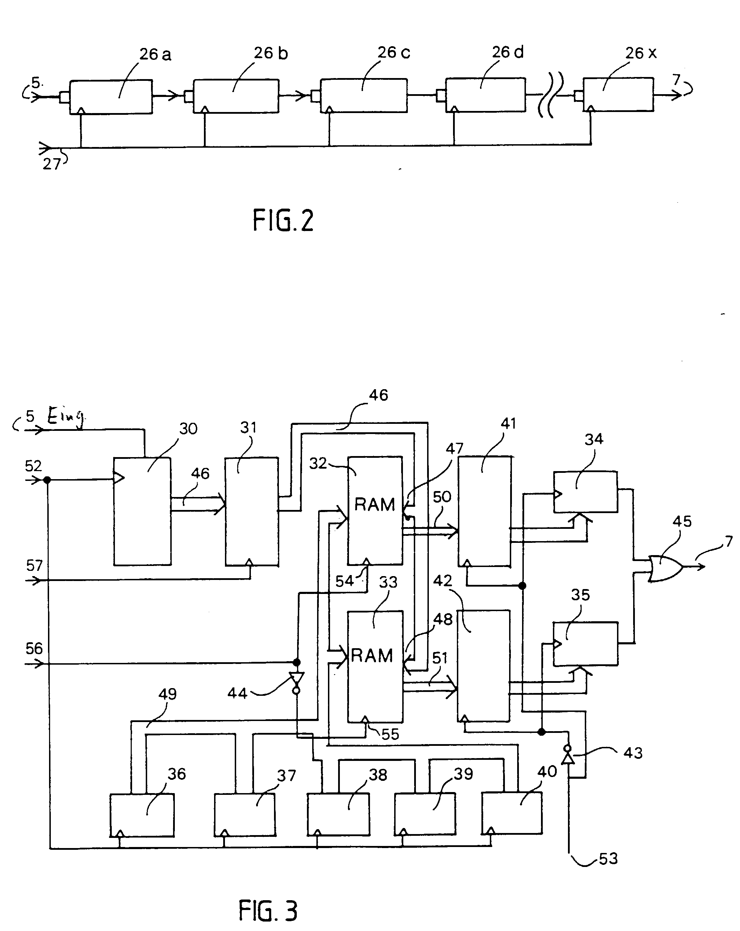

Fig. 2 zeigt ein erstes Beispiel einer einfachen Verzögerungsstufe - ein Schaltwerk - , das im wesentlichen aus mehreren 8-Bit Schieberegistern 26a ... 26x besteht, die in Serie miteinander geschaltet sind, so daß sich die gewünschte Verzögerungszeit der Daten am Eingang 5 zum Ausgang 7 durch die Anzahl entsprechend vieler Schieberegister ergibt. Die Schieberegister sind jeweils durch einen Bit-clock-rate-Impuls 27 synchronisiert. Dieses sehr einfach, aber wirkungsvoll aufgebaute Verzögerungs-Schaltwerk benötigt nur einen geringen Schaltungsaufwand und -Overhead und ist individuell mit dem timing zu Steuerung der Stumm-Schaltungen abstimmbar.

Fig. 3 zeigt ein zweites Beispiel einer Verzögerungsstufe, bestehend aus einem Seriell-Parallelwandler 30, einen Datenlatch-Schaltung 31, zwei flüchtigen Speichern 32 und 33, zwei Parallel-Seriell-Wandler 34 und 35 , fünf binären Zählers 36 - 40, Tor-Schaltungen 41 und 42, sowie zwei Invertern 43,44 und einem ODER-Gatter 45. Die Daten vom Signalprozessor 3 werden dem Seriell-Parallel-Wandler 30 über den Dateneingang 5 zugeführt. Der Seriell-Parallel-Wandler 30 weist einen Ausgangsbus 46 (gleich Datenbus) auf. In dem zwischengeschalteten Daten-latch 31 wird jeweils ein Datenwort des Datenbusses 46 zwischengespeichert. Der Datenbus ist mit den Datenbuseingängen 47 und 48 der zwei flüchtigen Speicher 32 und 33 elektrisch verbunden, in denen die zu verzögernden Daten gespeichert werden. Außerdem sind die beiden Speicher über einen Adressbus 49 mit fünf binären Zählern 35 - 40 verbunden, die die Ansteuerungsadressen zum Schreiben und/oder Lesen der Daten in den Speichern generieren. Die parallelen Ausgänge bzw. Ausgangsbusse 50 und 51 der beiden Speicher sind jeweils über weitere Daten-latche 41 und 42 jeweils einem eigenen Seriell-Parallel-Wandler 34 und 35 verbunden. Die seriellen Ausgänge der beiden Wandler 34 und 35 bilden die beiden Eingänge eines ODER-Gatters 45, daß die verzögerten Daten an den D/A-Wandler 9 oder die Stumm-Schaltung 11 für den digitalen Ausgang ausgibt. Die READ/WRITE-clock-Eingänge 54 und 55 der beiden Speicher sind mit dem READ/WRITE-Impulseingang 56 der Schaltung verbunden und vor dem READ/WRITE-Eingang 55 des Speichers 33 ist ein Inverter 44 angeordnet, so daß jeweils immer nur ein Datenwort in einen Speicher eingelesen, und gleichzeitig aus den entsprechenden anderen Speicher dann die Daten eines Datenwortes ausgelesen werden. Die Seriell-Parallel-Wandler und die binären Zähler 36 - 40 zur Adressgenerierung erhalten ihren clock-Impuls durch den Bit-clock-rate-Impuls 52. Die beiden Data-latch 41 und 42 am Ausgang der beiden Speicher 32 und 33 und die beiden Parallel-Seriell-Wandler 34 und 35 erhalten ihren Data-latch-Puls über den Data-latch-Pulseingang 53 der Schaltung, wobei der Data-latch-Eingang 53 mit dem Data-latch 42 und Wandler 35 über den Inverter 43 verbunden ist. Das Data-latch 31 erhält seinen Takt-Impuls vom Clock-Eingang 57 der Schaltung.

Eine weitere vorteilhafte Ausführungsform (nicht dargestellt) einer Verzögerungsstufe ist ein FIFO-Speicher (first-in-first-out).

Die Erfindung ist keineswegs auf DAT-Recorder/Player beschränkt. Eine solche Schaltungsanordnung ist in jedem Gerät zur Wiedergabe digitaler Daten, auch in einem digitalen Tuner, vorsehbar.

## Patentansprüche

1. Schaltung zur Wiedergabe digitaler Daten, wobei die in verschiedenen Datenraten empfangbaren Daten bei der Wiedergabe einem Signalprozessor zugeführt werden und Stumm-Schaltungen vorgesehen sind, die durch einen Mikrocontroller, der mit dem Signalprozessor verbunden ist, steuerbar sind, um in Abhängigkeit von der Detektion der empfangenen Daten Daten mit für die Wiedergabe unerlaubten Datenraten zu unterdrücken, wobei die Schaltung zur Wiedergabe wenigstens einen digitalen und einen analogen Ausgang aufweist und die jeweiligen Ausgänge durch separate Stumm-Schaltungen in Abhängigkeit von der Detektion unerlaubter oder erlaubter Datenraten abschaltbar oder freigebbar sind, wobei im Signalweg vom Signalprozessor (3) zum analogen und digitalen Ausgang (16, 25) vor den separaten Stumm-Schaltungen (15, 11) der jeweiligen Signalwege eine gemeinsame digitale Verzögerungsstufe (6) vorgesehen ist und wobei die Stummschaltung (15) für den analogen Ausgang zwischen einem D/A-Wandler (9) mit nachgeschaltetem Tiefpaßfilter (12) und dem analogen Ausgang (16) angeordnet ist.

2. Schaltung nach Anspruch 1, **dadurch gekennzeichnet,** daß die Verzögerungsstufe (6) aus einem sequentiellen Schaltwerk besteht.

3. Schaltung nach Anspruch 2, **dadurch gekennzeichnet,** daß das Schaltwerk aus wenigstens einem Schieberegister (26) besteht.

4. Schaltung nach Anspruch 3, **dadurch gekennzeichnet,** daß das Schaltwerk aus wenigstens zwei in Reihe geschalteten Schieberegistern (26a, 26b) besteht.

5. Schaltung nach Anspruch 1, **dadurch gekennzeichnet,** daß zwischen dem digitalen Ausgang (25) und der dafür vorgesehenen Stumm-Schaltung (11) eine digitale Ausgangsstufe (24) angeordnet ist.

## Claims

1. Circuit for reproducing digital data, whereby the data receivable in different data rates upon reproduction is fed to a signal processor, and whereby muting circuits are provided, which can be controlled by a microcontroller which is connected with a signal processor in order to suppress - in dependance from the detection of the received data - data with data rates which are unallowed for reproduction, and whereby the circuit for reproduction has at least one digital and one analog output and whereby each output can be switched off or released by separate muting circuits in dependance from the detection of unallowed or allowed data rates, whereby one joint digital delay stage (6) is located in the signal path from the signal processor (3) to the analog and digital output (16, 25) before the separate muting circuits (11, 15) of the respective signal paths and whereby the muting circuit (15) for the analog output is located between the D/A-converter (9) with a subsequent low pass filter (12) and the analog output (16).

2. Circuit according to claim 1, **characterized in that** the delay stage (6) consists of a sequential switching mechanism.

3. Circuit according to claim 2, **characterized in that** the switching mechanism consists of at least one shift register (26).

4. Circuit according to claim 3, **characterized in that** the switching mechanism consists of at least two shift registers (26a, 26b) connected in series.

5. Circuit according to claim 1, **characterized in that** a digital output stage (24) is located between the digital output (25) and the muting circuit (11) provided for this output.

## Revendications

1. Circuit de reproduction de données numériques où les données reçues à des vitesses de transfert différentes, sont amenées sur un processeur de signaux au moment de la reproduction, et où des circuits de mise en mode muet sont prévus qui sont commandés par un micro-contrôleur raccordé à un processeur de signaux afin de supprimer, en fonction de la détection des données reçues, toutes les données transmises à une vitesse interdisant la reproduction, sachant que ledit circuit de reproduction comporte au moins une sortie numérique et une sortie analogique et que lesdites sorties peuvent être respectivement bloquées ou libérées par des circuits de mise en mode muet séparés en fonction de la détection d'une vitesse de transfert de données non autorisée ou autorisée, sachant en outre qu'un étage de retard (6) est prévu dans le trajet des signaux entre le processeur de signaux (3) et les sorties analogique et numérique (16, 25), et ce en amont desdits circuits de mise en mode muet (15, 11) des trajets de signaux concernés, et que le circuit de mise en mode muet (15) pour la sortie analogique est disposé entre un convertisseur numérique/analogique (9) suivi d'un filtre passe-bas (12), et ladite sortie analogique (16).

2. Circuit selon la revendication 1 **caractérisé en ce que** ledit étage de retard numérique (6) est constitué d'un dispositif de commutation séquentiel.

3. Circuit selon la revendication 2 **caractérisé en ce que** ledit dispositif de commutation est constitué d'un registre à décalage (26) au moins.

4. Circuit selon la revendication 3 **caractérisé en ce que** ledit dispositif de commutation est constitué d'au moins deux registres à décalage (26a, 26b) connectés en série.

5. Circuit selon la revendication 1 **caractérisé en ce qu'**un étage de sortie numérique (24) est disposé entre la sortie numérique (25) et le circuit de mise en mode muet (11) prévu pour cette dernière.
